## Europäisches Patentamt

## European Patent Office

## Office européen des brevets

(11) Veröffentlichungsnummer: **0 072 338**
**B1**

(12) # EUROPÄISCHE PATENTSCHRIFT

(45) Veröffentlichungstag der Patentschrift:
12.10.88

(51) Int. Cl.⁴: **B 23 P 19/02**

(21) Anmeldenummer: **82630067.5**

(22) Anmeldetag: **06.07.82**

(54) Einrichtung zum paarweise Zusammenfügen von Klauen aufweisender Spundbohlen.

(30) Priorität: 12.08.81 LU 83549

(43) Veröffentlichungstag der Anmeldung:
16.02.83 Patentblatt 83/7

(45) Bekanntmachung des Hinweises auf die Patenterteilung:
12.10.88 Patentblatt 88/41

(84) Benannte Vertragsstaaten:
DE FR GB

(56) Entgegenhaltungen:
EP-A-0 005 210
DE-B-1 149 306
DE-B-1 259 184
US-A-2 705 981
US-A-3 651 555
US-A-4 243 465

(73) Patentinhaber: **ARBED S.A., Avenue de la Liberté 19, L-2930 Luxembourg (LU)**

(72) Erfinder: **Graas, René, 1 rue des Romains, L-4307 Esch/Alzette (LU)**
Erfinder: **Fackelstein, Michel, 163 avenue de la Liberté, L-4602 Niedercorn (LU)**

(74) Vertreter: **Neyen, René, Administration Centrale de l'Arbed Case postale 1802, L-2930 Luxembourg (LU)**

EP 0 072 338 B1

## Beschreibung

Die Erfindung betrifft eine Einrichtung zum paarweise Zusammenfügen - sog. Zusammenfädeln - von Spundbohlen, die Klauen aufweisen.

Wie bereits aus der DE-B-1 259 184 bekannt, werden Spundbohlen, ob Z- oder U-förmig, aus Gründen der Wirtschaftlichkeit nicht nur einzeln, sondern in zunehmendem Masse paarweise zusammengefügt zur Baustelle geliefert, wo man mittels entsprechend ausgestalteten Rammvorrichtungen Spundbohlenpaare in den Untergrund eintreibt.

Will man die durch den paarweise erfolgenden Rammvorgang erzielten Vorteile voll ausnutzen, so muss das Zusammenfügen der Einzelbohlen problemlos durchgeführt werden können.

Beim Zusammenfügen von Spundbohlen spielen mehrere Faktoren eine Rolle, so z. B. die Bohlenlänge, die Form der Klauen und deren Massgenauigkeit, so kann es insbesondere bei langen Bohlen im Verlauf des Schubvorganges zu einem Sperren kommen, das eine Beschädigung der Klauen zur Folge hat. Üblicherweise versucht man solche Schwierigkeiten zu umgehen, indem man die zum Schubvorgang dienenden Geräte so dimensioniert, dass ein Sperren durch einen erhöhten Krafteinsatz überwunden wird. Hierbei kommt es notgedrungen zu einer Verformung im Klauenbereich, die sich erst Später, nach erfolgter Fertigstellung der Spundwand, bemerkbar macht. Ein Schaden dieser Art an einer fertigen Spundwand lässt sich jedoch nur schwer beheben.

Die als nächstliegender Stand der Technik anzusehende DE-B-1 259 184 beschreibt eine Anlage zum Zusammenfügen von Spundbohlen, in der das Einführen dadurch bewerkstelligt wird, dass die Schubwirkung mittels magnetischer Transportrollen hervorgerufen wird. Die magnetische Haftung soll ausreichen, um nicht nur die Reibung der Schlossteile zu überwinden, sondern um auch noch Unregelmässigkeiten in der Gestalt der Schlösser zu überfahren.

Einerseits benötigt diese Anlage teure Maschinenteile, nämlich Transportrollen, deren Oberflächen magnetisierbar und entmagnetisierbar sein müssen; andererseits ist sie zu einer vollautomatischen Arbeitsweise nicht geeignet. In der Tat ist ein Einfädeln der Schlossteile von Hand vorgesehen, ehe das eigentliche Ineinanderschieben erfolgt. Ausserdem sind die Mechanismen zum Erreichen einer deckungsgleichen Stellung der ineinanderzufügenden Schlösser kompliziert und deshalb kostspielig.

Der Erfindung liegt die Aufgabe zugrunde eine Anlage vorzuschlagen, die das problemlose Zusammenfügen von Einzelbohlen, ob Z- oder U-förmig, erlaubt und die oben erwähnten Schwierigkeiten vermeidet.

Diese Aufgabe wird durch die in Anspruch 1 angegebene Erfindung gelöst. Vorteilhafte Ausgestaltungen des Erfindungsgegenstandes sind in den abhängigen Ansprüchen angegeben.

Zum besseren Verständnis der durch die Erfindung gebotenen Vorteile werden in der Folge der Funktionsablauf der Anlage, sowie die schematischen Zeichnungen beschrieben, die eine bevorzugte Ausgestaltung der Erfindung darstellen.

Es zeigen:

Die Fig. 1 und die Fig. 2 Schnitte durch die in den Bereichen I resp. II befindlichen, relevanten Elemente, in einer zum Zusammenfügen von zwei Z-förmigen Spundbohlen geeigneten Ausführungsform;

die Fig. 3 und die Fig. 4 Schnitte durch die in den gleichen Bereichen befindlichen Elemente, in einer zweiten Ausführungsform, die auf das Zusammenfügen von zwei U-förmigen Bohlen ausgerichtet ist;

die Fig. 5 eine Draufsicht auf die Anlage in ihrer Gesamtheit und

die Fig. 6 einen Schnitt in dem eine Variante zu der in der Fig. 3 gezeigten Ausführungsform zum Zusammenfügen zweier U-Bohlen gezeigt wird.

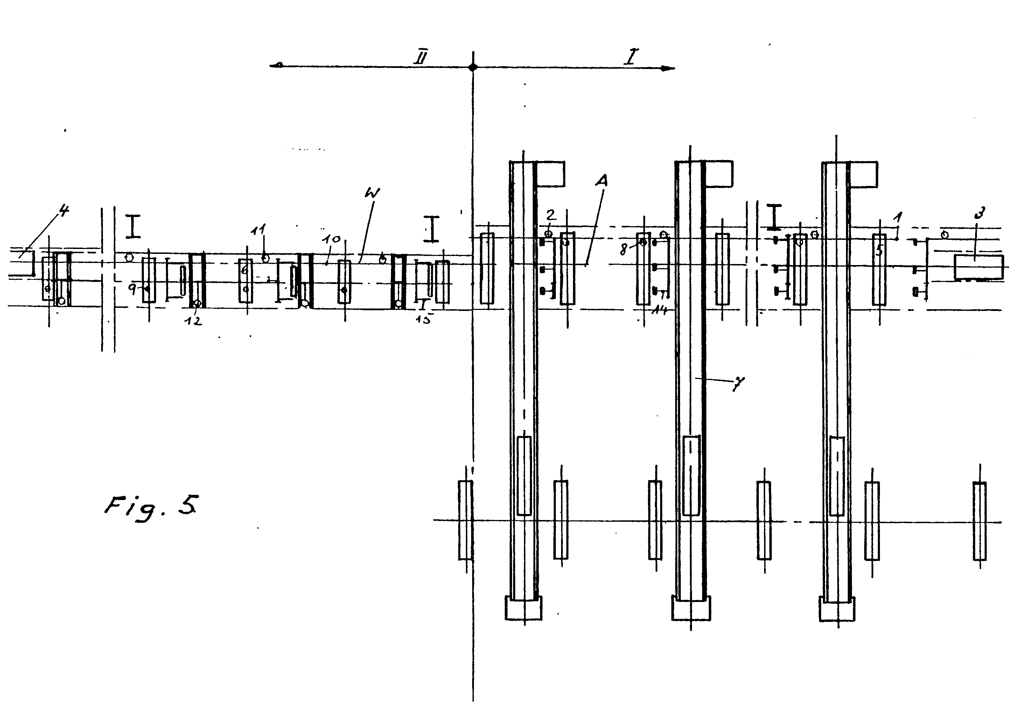

Die in der Fig. 5 gebotene Übersicht über die gesamte Anlage nach der Erfindung lässt erkennen, dass die zusammenzufügenden Bohlen mittels dem Rollgang 6 im Bereich II in die Anlage eingeführt werden.

Für das Zusammenfügen von Z-Bohlen verläuft der Funktionsablauf der Anlage wie folgt: Wie aus den Fig. 5 sowie 1 und 2 ersichtlich, wird die Fluchtkante 1 im Bereich I eingestellt, indem man die Nockenwellen 2 in die erforderliche Lage bringt. Jede Nockenwelle 2 ist eine exzentrische Senkrechtwelle aus gehärtetem Stahl, welche je nach den Bohlenbreiten mittels eines Anstellgetriebes eingestellt werden kann.

Die beiden Schubwagen 3 und 4 werden nun entsprechend der Bohlenlänge verfahren und in die Aufgangsposition gebracht. Der Schubwagen 3, der als Gegenhalter fungiert, hat einen festen Schubarm 30, während der Schubwagen 4 mit einem ein- und ausfahrbaren Schubarm 40 ausgerüstet ist, um ein Verfahren zum Rangieren ohne Schubwirkung zu ermöglichen.

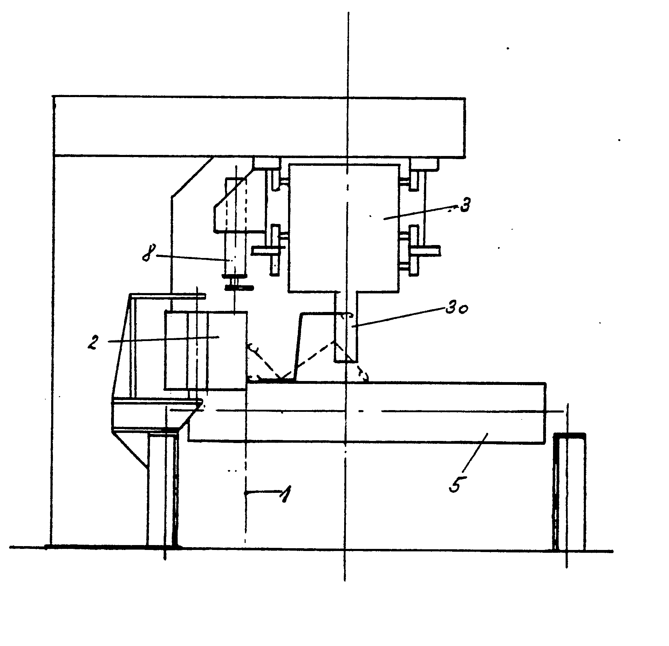

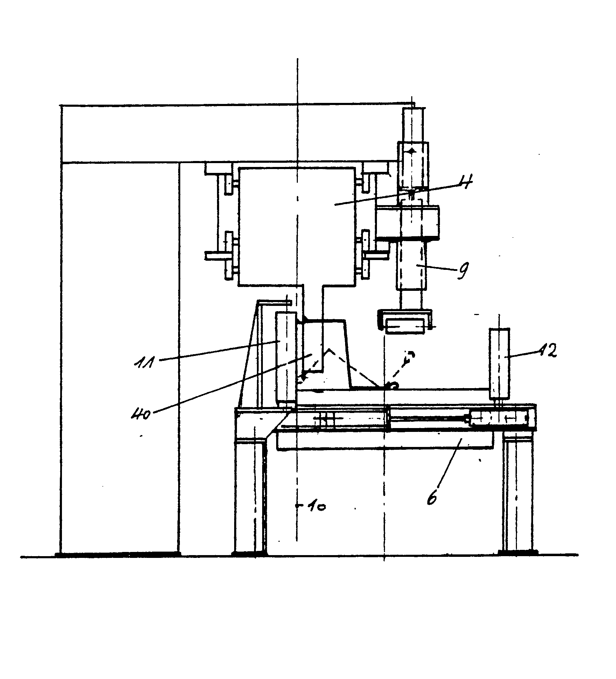

Die beiden Bohlen werden hintereinanderliegend über die Rollgänge 6 und 5 bis an den Schubwagen 3 eingefahren. Dann wird die Bohle im Bereich I mittels dem Querschlepper 7 an die Fluchtkante 1 angelehnt. Zum Aufrichten der Bohle im Bereich 1 dienen die Anpressrollen 8, während die Bohle im Bereich II durch die Anpressrollen 9 aufgerichtet werden. In den Fig. 1 und 2 wird die jeweilige Bohlenposition in der Anlieferphase gestrichelt und in der aufgerichteten Lage voll ausgezogen dargestellt.

Weiter wird nun auch die Bohle im Bereich II an ihre Fluchtkante 10 angelehnt. Dies geschieht, wie in der Fig. 2 gezeigt, mit Hilfe des Anstellgerätes 12, das aus verstellbaren Senkrechtrollen besteht, welche die Bohle an die die Fluchtkante 10 bildenden Rollen 11 anlehnt.

Die auf diese Weise erreichte geometrische Anordnung der Bohlen bewirkt, dass die ineinanderzuschiebenden Klauen einander tatsächlich gegenüberliegen, sodass die Bohlen mittels der beiden Schubwagen 3 und 4 problemlos zu einem Paar vereint werden können.

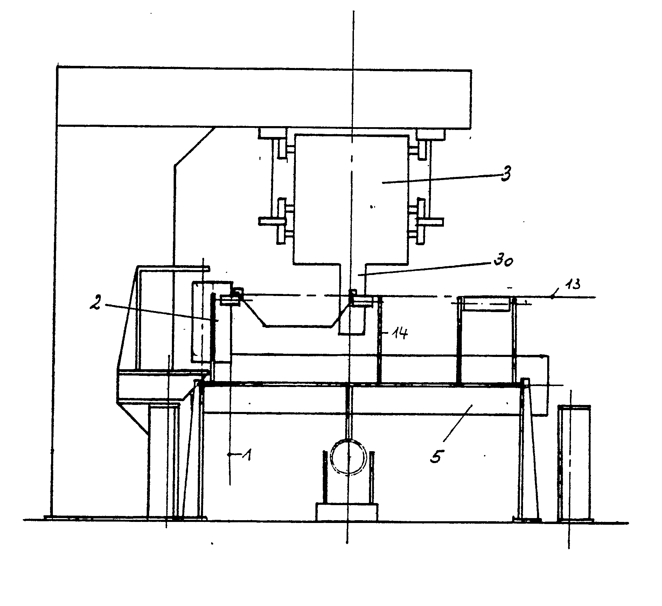

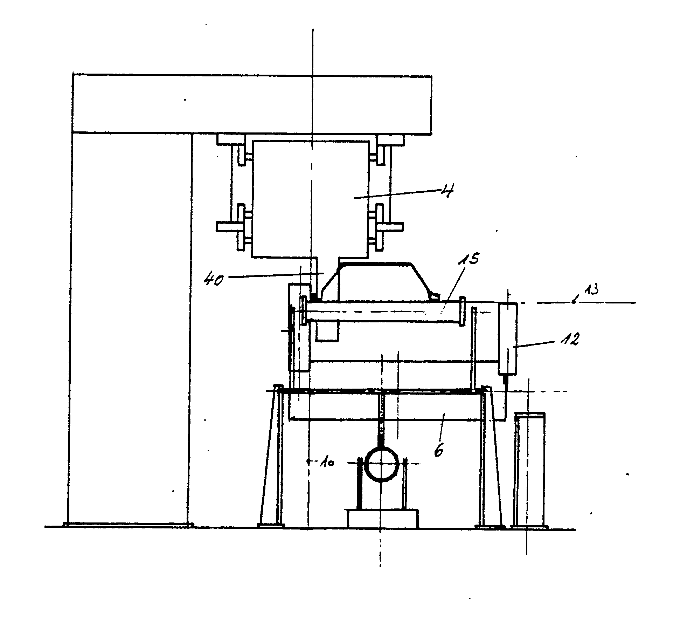

Zum Ineinanderschieben U-förmiger Bohlen wird bspw. die in den Fig. 5 sowie 3 und 4 gezeigte Ausführungsform der Anlage verwendet.

Auch hier wird die Fluchtkante 1 entsprechend der Modulbreiten eingestellt und die Bohlen im Bereich I mittels des Querschleppers 7 und im Bereich II mittels der Anstellvorrichtung 12 an die jeweiligen Fluchtkanten angelehnt.

Die horizontale Höheneinstellung an eine Fluchtkante 13 erfolgt in den Bereichen I und II jeweils mittels den Heberollen 14 und 15.

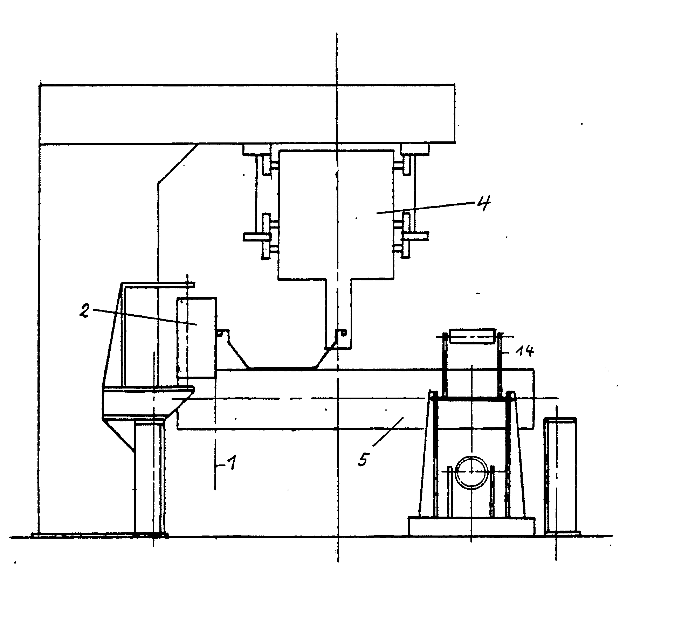

Die Fig. 6 zeigt eine weitere Ausführungsform einer derartigen Einrichtung, in der die U-Bohle im Bereich I auf dem Rollgang 5 liegt, während die U-Bohle im Bereich II auf die notwendige Höhe angehoben wird. Letzteres erfolgt mittels einer zusätzlichen, nicht gezeigten Anstellvorrichtung.

Die erfindungsgemässe Anlage gestattet im Vergleich zu herkömmlichen Anlagen minimale Schubkräfte vorzusehen, was eine direkte Folge der hier angewandten Krafteinleitung ist. Durch das gegenseitige Aufheben der Kräfte der beiden Schubwagen kann man relativ leichte Unterstützungskonstruktionen einsetzen. Weiter wird dank der erfindungsgemässen Ausgestaltung der Schubmechanismen auch bei grossen Bohlenlängen ein Sperren während des Schubvorganges verhindert.

Ein konkretes Ausführungsbeispiel der erfindungsgemässen sieht die Möglichkeit vor, Z-sowie U-Bohlen mit Modulbreiten von 500 und 550 mm bzw. 600 und 700 mm zu verbinden, wobei Verbundlängen von 6 bis 36 m in Frage kommen; beide Schubwagen werden demzufolge mit einer automatischen Fahrlängeneinstellung (6 - 36 m) ausgestattet.

Die Verbundgeschwindigkeit ist bis zu 1 m/sec stufenlos regelbar. Die Geschwindigkeit eines Schubwagens kann bis 2 m/sec betragen.

## Patentansprüche

1. Anlage zum paarweisen Zusammenfügen von Klauen aufweisenden Spundbohlen, in der ein erster horizontaler Rollengang (6) in einen zweiten dazu parallel und seitlich versetzt angeordneten Rollengang (5) übergeht, versehen mit Einrichtungen (8, 14; 9, 15) zum gegenüber der Rollengangebene vertikalen Ausrichten der Spundbohlen und mit Einrichtungen (3, 4) zum Einschieben einer zweiten Spundbohle entlang des ersten Rollengangs (6) in eine erste Spundbohle auf dem zweiten Rollengang (5), dadurch gekennzeichnet,

a) dass der erste Rollengang (6) eine erste Fluchtkante (10) zum Anlegen der zweiten Spundbohle aufweist, wobei die erste Fluchtkante aus ortsfesten Rollen (11) auf vertikalen Achsen besteht;

b) dass der zweite Rollengang (5) eine Fortsetzung des ersten Rollengangs (6) über dessen ganze Breite bildet und darüber hinaus über die Linie der ersten Fluchtkante (10) seitlich hinausragt;

c) dass eine zweite, verstellbare Fluchtkante (1) entlang des über die Linie der ersten Fluchtkante (10) hinausragenden Randes des zweiten Rollengangs (5) durch vertikal angeordnete, mit Einstellgetrieben ausgerüstete Nocken (2) gebildet wird, an die die erste Spundbohle angelegt wird;

d) dass Querverschiebungseinrichtungen (7, 12) zum Transport der Spundbohlen quer zu den Rollengängen (5, 6) vorgesehen sind, damit, nachdem die erste Spundbohle über den ersten Rollengang (6) bis zum zweiten Rollengang (5) vorgefahren und die zweite Spundbohle bis zum ersten Rollengang (6) nachgezogen worden ist, die erste Spundbohle an die zweite Fluchtkante (1) und die zweite Spundbohle an die erste Fluchtkante (10) angelegt werden können;

e) dass über beiden Rollengängen eine Fahrbahn (W) angeordnet ist, auf der sich zwei Schubwagen (3, 4) zum Ineinanderschieben der Klauen der Spundbohlen befinden, wobei die Angriffslinie der Schubwagen im wesentlichen deckungsgleich mit der ersten Fluchtkante (10) und damit auch mit den ineinanderzuschiebenden Klauen der Spundbohlen verläuft.

2. Anlage nach dem Anspruch 1, dadurch gekennzeichnet, dass zum Positionieren von Z-Bohlen in die deckungsgleiche Klauenlage, vorzugsweise hydraulisch regelbare, vertikal verstellbare, um eine quer zu den Rollengängen horizontal gerichtete Achse, drehbare Anpressrollen (8, 9) vorgesehen sind, die die Flansche der Bohlen an die Rollengänge (5, 6) anpressen und sie hierdurch aufrichten.

3. Anlage nach dem Anspruch 1, dadurch gekennzeichnet, dass zum Positionieren von U-Bohlen in die deckungsgleiche Klauenlage Heberollen (14, 15) vorgesehen sind.

4. Anlage nach einem der Ansprüche 1 - 3, dadurch gekennzeichnet, dass die Schubwagen (3, 4) eine automatische Fahrlängeneinstellung aufweisen.

5. Anlage nach einem der Ansprüche 1 - 4, dadurch gekennzeichnet, dass zumindest einer der Schubwagen (3, 4) einen ein- und ausfahrbaren Schubarm (30, 40) aufweist.

6. Anlage nach dem Anspruch 1, dadurch gekennzeichnet, dass die Querverschiebungseinrichtung (12) zum Anlegen der zweiten Bohle an die erste Fluchtkante (10) aus horizontal verstellbaren um eine vertikal gerichtete Achse drehbaren Rollen besteht.

7. Anlage nach dem Anspruch 1, dadurch gekennzeichnet, dass die Querverschiebungseinrichtung (7) zum Anlegen der ersten Bohle an die zweite Fluchtkante (1) aus einem Querschlepper besteht.

## Claims

1. Apparatus for the paired connection of sheet piles with claws, comprising a first roller bed (6) opening on a second parallel and laterally offset roller bed (5) and means (8, 14; 9, 15) for vertically aligning the sheet piles relatively to the roller bed plane and means (3, 4) for threading a second sheet pile along the first roller bed (6) and a first sheet pile on the second roller bed (5), characterized in

a) that the first roller bed (6) has a first alignment plane (10) for positioning the second sheet pile, the first alignment plane being constituted by vertically mounted stationary rollers (11);

b) that the second roller bed (5) is a continuation of the first roller bed (6) on its whole width and stretches laterally beyond the first alignment plane (10);

c) that beyond the first alignment plane (10), along the second roller bed (5) there is a second adjustable alignment plane (1), defined by a series of vertical cam shafts (2), provided with adjustment means, against which the first sheet pile is leaning;

d) that lateral shifting mechanisms (7, 12) for moving the sheet piles transversely to the roller beds (5; 6) are provided in order that, after the first sheet pile has been moved along the first roller bed (6) onto the second roller bed (5) and the second sheet pile has been moved onto the first roller bed (5), the first sheet pile can be positioned against the second alignment plane (1) and the second sheet pile against the first alignment plane (10);

e) that above the two roller beds a track (W) is located on which two rams (3, 4) are movable in order to thread the claws of the sheet piles, the thrust line of the rams being substantially in line with the first alignment plane (10) and hence also with the claws to be threaded.

2. Apparatus according to claim 1, characterized in that for moving the claws of piles of Z-shaped cross-section into engaging alignment, hydraulically adjustable, vertically displaceable pressure rollers (8, 9), having a horizontal axis transverse to the roller beds are included, the rolls pressing the pile edges against the roller beds (5, 6) and giving them an upright position.

3. Apparatus according to claim 1, characterized in that for moving the claws of piles of U-shaped cross-section into engaging alignment, lifting rolls (14, 15) are included.

4. Apparatus according to one of the claims 1 - 3, characterized in that the movement of the rams (3, 4) is controlled by an automatic path length adjuster.

5. Apparatus according to one of the claims 1 - 4, characterized in that at least one of the rams (3, 4) has a thrust arm (30, 40) which is retractable into and out of the body of the ram.

6. Apparatus according to claim 1, characterized in that the lateral shifting mechanism (12) for positioning the second pile against the first alignment plane (10), consists of horizontally displaceable rolls which are rotatable around a vertical axis.

7. Apparatus according to claim 1, characterized in that the lateral shifting mechanism (7) for positioning the first pile against the second alignment plane (1) consists of a transfer skid.

## Revendications

1. Installation pour l'enfilage d'une paire de palplanches à griffes, comportant un premier convoyeur à rouleaux (6) débitant sur un deuxième convoyeur à rouleaux (5) parallèle et latéralement désaxé au premier convoyeur, munie de dispositifs (8, 14; 9, 15,) pour l'alignement vertical des palplanches par rapport au plan horizontal des convoyeurs à rouleaux et de dispositifs (3, 4,) servant à enfiler une deuxième palplanche disposée au long du premier convoyeur à rouleaux (6) et une première palplanche disposée au long du deuxième convoyeur (5), caractérisée en ce que

a) le premier convoyeur à rouleaux (6) comporte un premier plan d'alignement (10) contre lequel s'appuie la deuxième palplanche, ce premier plan d'alignement étant constitué de cylindres (11) à emplacement fixe, tournant autour d'axes verticaux;

b) le deuxième convoyeur (5) constitue un prolongement du premier convoyeur (6) sur toute la largeur de celui-ci et qu'il dépasse latéralement la ligne du premier plan d'alignement (10);

c) un deuxième plan d'alignement déplaçable (1) est formé le long du bord du deuxième convoyeur à rouleaux (5) et en dépassenent de la ligne du premier plan d'alignement (10) par des cylindres à cames verticaux (2), déplaçables par un dispositif de positionnement et contre lesquels s'appuie la première palplanche;

d) des dispositifs de transfert latéral (7, 12) sont prévus pour le déplacement transversal des palplanches aux convoyeurs à rouleaux (5, 6) permettant l'appui de la première palplanche au deuxième plan d'alignement (1) et de la deuxième palplanche au premier plan d'alignement (10), après avancement de la première palplanche par le moyen du premier convoyeur (6) jusqu'au deuxième convoyeur (5) et après avancement de la deuxième palplanche jusqu'au premier convoyeur (6);

e) au-dessus des deux convoyeurs à rouleaux est disposé un chemin de roulement (W) sur lequel se déplacent deux chariots-poussoirs (3, 4) pour l'enfilage des griffes des palplanches et dont le chemin de déplacement est essentiellement en ligne avec le premier plan d'alignement (10) et donc avec l'alignement des griffes des palplanches à enfiler.

2. Installation suivant la revendication 1, caractérisée en ce qu'elle prévoit, pour le positionnement de palplanches en Z en alignement concordant des griffes, des rouleaux d'appui (8, 9), tournant autour d'un axe horizontal transversal aux convoyeurs à rouleaux, réglables en sens vertical et de préférence ajustables par moyens hydrauliques, qui serrent les ailes des palplanches contre les convoyeurs à rouleaux (5, 6), provoquant ainsi leur redressement.

3. Installation suivant la revendication 1, caractérisée en ce que des rouleaux-élévateurs (14, 15) sont prévus pour le positionnement de palplanches en U en position concordante des griffes.

4. Installation suivant l'une des revendications 1 à 3, caractérisée en ce que les chariots-poussoirs (3, 4) sont munis d'un dispositif automatique de réglage de longueur de course.

5. Installation suivant l'une des revendications 1 à 4, caractérisée en ce qu'au moins l'un des chariots-poussoirs (3, 4) est pourvu d'une barre de poussée (30, 40) pouvant être avancée ou rétractée.

6. Installation suivant la revendication 1, caractérisée en ce que le dispositif de transfert latéral (12) pour le positionnement de la deuxième palplanche le long du premier plan d'alignement (10) comporte des rouleaux tournant autour d'un axe vertical et déplaçables dans le sens horizontal.

7. Installation suivant la revendication 1, caractérisée en ce que le dispositif de transfert latéral (7) pour le positionnement de la première palplanche le long du deuxième plan d'alignement (1) est constitué d'un dispositif de transfert latéral à poussoirs.

Fig. 5

0072 338